(19) **Europäisches Patentamt**

**European Patent Office**

**Office européen des brevets**

(11) **EP 0 976 779 B1**

(12) **EUROPÄISCHE PATENTSCHRIFT**

(45) Veröffentlichungstag und Bekanntmachung des Hinweises auf die Patenterteilung:
**03.03.2004  Patentblatt 2004/10**

(51) Int Cl.7: **C08J 3/28**
// C08L23:08, C08L31:04, C08L33:08

(21) Anmeldenummer: **99114147.4**

(22) Anmeldetag: **20.07.1999**

(54) **Kautschuk-Polymerisate mit einem hohen Gelgehalt und einem hohen Quellgrad**

Rubber polymers with high gel content and elevated degree of swelling

Polymères caoutchouteux ayant une haute teneur en gel et un degré de gonflage élevé

(84) Benannte Vertragsstaaten:
**DE FR GB IT**

(30) Priorität: **31.07.1998  DE 19834580**

(43) Veröffentlichungstag der Anmeldung:
**02.02.2000  Patentblatt 2000/05**

(73) Patentinhaber: **Bayer Aktiengesellschaft**
**51368 Leverkusen (DE)**

(72) Erfinder:
- **Hoch, Martin, Dr.**
  **42657 Solingen (DE)**
- **Meisenheimer, Hermann, Dr.**
  **51069 Köln (DE)**
- **Sesterhenn, Lothar**
  **41541 Dormagen (DE)**

(56) Entgegenhaltungen:
| | |
|---|---|
| **EP-A- 0 101 833** | **EP-A- 0 976 778** |
| **DE-A- 2 931 793** | **US-A- 3 988 227** |
| **US-A- 4 412 896** | |

- **PATENT ABSTRACTS OF JAPAN vol. 009, no. 237 (C-305), 24. September 1985 (1985-09-24) & JP 60 096623 A (SEKISUI KAGAKU KOGYO KK), 30. Mai 1985 (1985-05-30)**
- **DATABASE WPI Section Ch, Week 197832 Derwent Publications Ltd., London, GB; Class A17, AN 1978-57571A XP002139508 & JP 53 075278 A (ASAHI DOW LTD), 4. Juli 1978 (1978-07-04)**
- **DATABASE WPI Section Ch, Week 197710 Derwent Publications Ltd., London, GB; Class A32, AN 1977-17414Y XP002139509 & JP 52 011270 A (HITACHI CABLE LTD), 28. Januar 1977 (1977-01-28)**

EP 0 976 779 B1

**Beschreibung**

Die Erfindung betrifft Kautschukpolymerisate auf Basis von polymerisierbaren Monomeren mit einem hohen Gelgehalt sowie einem hohen Quellgrad, die Herstellung der genannten Kautschukpolymerisate sowie deren Verwendung zur Herstellung von Formkörpern aller Art.

Die geringe Viskosität von vielen nach dem Stand der Technik erhältlichen Kautschukpolymerisaten, insbesondere von Ethylen-Vinylacetat-Kautschuken oder Ethylen-Acrylat-Kautschuken oder Acrylat-Kautschuken führt zu beträchtlichen Problemen bei der Verarbeitung, die ihren Einsatz in vielen technischen Anwendungen unmöglich machen. Derartige Probleme sind beispielsweise Kleben auf der Walze, ungenügende Standfestigkeit bei der Profilfertigung oder zu geringer Massedruck beim Spritzgußformen.

Nach dem bisherigen Stand der Technik wurde bei der Herstellung von Kautschukpolymerisaten auch darauf geachtet, daß der Gelgehalt der erhaltenen Kautschukpolymerisate möglichst gering war, damit die direkte Verarbeitbarkeit der erhaltenen Kautschukpolymerisate im großen und ganzen gewährleistet ist. Der Gelgehalt der Kautschukpolymerisate betrug dabei üblicherweise bis zu etwa 20 Gew.-%. Der Gelgehalt der Polymerisate wurde dabei in üblicher Weise eingestellt durch chemische und/oder physikalische Vernetzung, beispielsweise durch Strahlenvernetzung oder durch Vernetzung mit Schwefel oder schwefelhaltigen Verbindungen und peroxidischen Verbindungen.

So wird beispielsweise die Strahlenvernetzung von Elastomeren ausführlich von W. Hofmann in Rubber Technology Handbook, Seite 403 bis 406, Hanser Publishers, München, Wien, New York, 1989 beschrieben. Weiterhin ist die Vernetzung mit energiereichen Strahlen beschrieben im Handbuch für Vulkanisation und Vulkanisationshilfsmitteln, Herausgeber: BAYER AG, Leverkusen, 1965, Seite 359 bis 363. Leider sind die nach dem Stand der Technik behandelten Polymerisate häufig nur schlecht in den üblichen Verarbeitungsapparaturen verarbeitbar.

Aufgabe der vorliegenden Erfindung war es, Kautschukpolymerisate zur Verfügung zu stellen, die in üblichen Kautschukverarbeitungsmaschinen ohne Probleme verarbeitet werden können. Das bedeutet, daß bei der Mischungsherstellung und Weiterverarbeitung der Kautschukmischungen kein Kleben auf der Walze stattfindet, eine ausreichende Standfestigkeit nach der Formgebung gewährleistet ist, und darüber hinaus eine Blasenbildung beispielsweise beim Spritzgießen verhindert wird.

Gegenstand der vorliegenden Erfindung sind Kautschukpolymerisate auf Basis von polymerisierbaren Monomeren mit einem Gelgehalt von 40 bis 80 %, bezogen auf die gesamte Menge an Polymerisat, und einem Quellindex von 30 bis 75, bezogen auf das Gel, wobei man den Gelgehalt und den Quellindex durch Behandlung mit $\gamma$-Strahlen einstellt.

Weiterhin ist Gegenstand der vorliegenden Erfindung die Verwendung der erfindungsgemäß hergestellten Kautschukpolymerisate zur Herstellung von Formkörpern oder Folien aller Art.

Der Gelgehalt und der Quellindex der erfindungsgemäßen Kautschukpolymerisate wird bestimmt nach folgender Methode:

Die Probe wird in Methylenchlorid, dem 1 g/l Ionol zugesetzt wurde, gegeben, so daß 12,5 g Polymer pro 1 Lösungsmittel kommen. Es wird 6 Stunden bei 140°C geschüttelt, dann 1 Stunde mit 20.000 U/min zentrifugiert, wobei die Temperatur weiter bei 140°C gehalten wurde. Die Sol-Lösung wird abgetrennt und kann gegebenenfalls weiter untersucht werden. Das Gel wird erst feucht gewogen und die Menge des trockenen Gels bestimmt, das nach Trocknung bis zur Gewichtskonstanz im Vakuumtrockenschrank erhalten wird.

Der prozentuale Gelgehalt und der Quellindex wird nach folgenden Formeln errechnet:

$$\text{Gelgehalt} = \frac{\text{Masse des getrockneten Gels}}{\text{Gesamteinwaage der Probe}} \cdot 100$$

$$\text{Quellindex} = \frac{\text{Masse des feuchten Gels}}{\text{Masse des getrockneten Gels}} \cdot$$

Bevorzugt besitzen die erfindungsgemäßen Kautschukpolymerisate einen Gelgehalt von 30 bis 80 %, insbesondere 40 bis 70 %. Der Quellindex beträgt bevorzugt 30 bis 75, insbesondere 40 bis 60.

Die erfindungsgemäßen Kautschukpolymerisate sind aufgebaut aus polymerisierbaren Monomeren, die einzeln oder in beliebigen Mischungen untereinander eingesetzt werden können. Das jeweils günstige Mischungsverhältnis richtet sich nach dem Zweck der aus den Kautschukpolymerisaten herzustellenden Formkörpern und kann leicht durch entsprechende Vorversuche ermittelt werden.

Als polymerisierbare Monomere kommen ethylenisch ungesättigte Monomere, Diene oder Triene in Betracht. Die Monomere können gegebenenfalls substituiert sein, wobei die Substituenten ausgewählt sein können aus Halogen, insbesondere Chlor, Brom und Jod, gegebenenfalls substituierten Alkylgruppen, insbesondere Methyl, Ethyl, n-Propyl, iso-Propyl, n-Butyl, sec.-Butyl, iso-Butyl, tert.-Butyl, n-Pentyl, n-Hexyl, gegebenenfalls substituierte Alkoxygruppen, insbesondere Methoxy, Ethoxy, n-Propoxy, iso-Propoxy, n-Butoxy, sec.-Butoxy, tert.-Butoxy, iso-Butoxy, gegebenenfalls substituierte Arylgruppen, insbesondere Phenyl, Tolyl, gegebenenfalls substituierte Aryloxygruppen, insbesondere Phenoxy, p-Methylphenoxy, gegebenenfalls substituierte Oxycarbonylgruppen, insbesondere Acetoxy, Propionyloxy, Butyryloxy, gegebenenfalls substituierte Carboxylgruppen oder veresterte Carboxylgruppen, insbesondere Methylcarboxylat, Ethylcarboxylat, Propylcarboxylat, gegebenenfalls substituierte Cyano-, Sulfonat-, Vinylester-, Vinylether- und Allylgruppen. Falls die Substituenten nochmals substituiert sind, so sind diese Substituenten vorzugsweise mit $C_1$-$C_{20}$-Gruppen oder Halogenen substituiert.

Besonders bevorzugte Monomere sind Ethylen, Propylen, 1-Buten, 2-Buten, 1-Penten, Chlorethylen, Styrol, Methylacrylat, Methylmethacrylat, Ethylmethacrylat, Methacrylsäure, Vinylacetat, Maleinsäure-mono- und -diester, Methylvinylether, Ethylvinylether, Cyanacrylat, Butadien, Isopren, Chloropren und Ethylidennorbornen.

Ganz besonders bevorzugt sind Kautschukpolymerisate, die aufgebaut sind aus Ethylen und Vinylacetat, aus Ethylen und o.g. Acrylaten und aus den reinen o.g. Acrylaten.

Bei den obengenannten Polymerisaten beträgt das Mischungsverhältnis der Monomere zueinander üblicherweise 0,1 % bis 99,9 %, insbesondere 5 % bis 95 %, ganz besonders bevorzugt 30 % bis 80 %.

Der Gelgehalt und der Quellgrad der erfindungsgemäßen Kautschukpolymerisate wird eingestellt durch ionisierende Strahlung. Als ionisierende Strahlung kommt bevorzugt Behandlung mit γ-Strahlung in Betracht.

Um den Gelgehalt und den Quellgrad der erfindungsgemäßen Kautschukpolymerisate einstellen zu können, wird die Behandlung mit ionisierender γ-Strahlung mit einer Strahlendosis von 20 bis 140, bevorzugt 60 bis 120, insbesondere 70 bis 100 kGy (kilo Gray) durchgeführt. Die Bestrahlung kann mit jeder beliebigen dafür geeigneten Anlage durchgeführt werden, z.B. mit einer 3,5 MCi $^{60}$Co-Gamma-Anlage (ca. 1,3 MeV). Ebenfalls geeignet neben Co-60-Strahlen sind auch Strahlen des $^{137}$Cs-Isotops. Die applizierte Bestrahlungsdosis kann z.B. mit Hilfe eines photometrischen Systems der Fa. FAR WEST TECHNOLOGY, USA und der von dieser Firma gelieferten Filmdosimeter gemessen werden. Diese Filmdosimeter enthalten einen strahlenempfindlichen Farbstoff, über dessen Veränderung der optischen Dichte die Bestrahlungsdosis nach Beendigung des Bestrahlungsprozesses errechnet wird. Diese Dosimeter sind ab Werk gegen einen international anerkannten Standard kalibriert.

Die Behandlung mit γ-Strahlung kann dabei in üblicher Weise bei Temperaturen von 0° bis 130°, bevorzugt 10° bis 120°, insbesondere 20 bis 80°C, durchgeführt werden. Der günstigste Temperaturbereich kann dabei leicht durch entsprechende Vorversuche ermittelt werden. Wesentlich ist, daß der Temperaturbereich so gewählt wird, daß eine ausreichende Radikalbeweglichkeit gewährleistet ist.

Bevorzugt werden die erfindungsgemäßen Kautschukpolymerisate hergestellt, indem man zunächst die Polymerisation der eingesetzten Monomere in üblicher Weise durchführt und anschließend die so hergestellten Polymerisate mit ionisierender Strahlung behandelt.

Dabei ist es möglich, die Kautschukpolymerisate in verschiedensten Formen zu behandeln, von Pulverform bis zu großen Ballen. Es ist dabei nur zu gewährleisten, daß die eingesetzte γ-Strahlung die eingesetzten Polymerisate ausreichend durchdringt.

Zur Einstellung eines gewünschten Gelgehalts hat es sich als besonders vorteilhaft erwiesen, wenn nach der Bestrahlung der Kautschukpolymerisate diese anschließend in dafür geeignete Apparaturen (Innenmischer, Walzwerte oder Co-Kneter) homogenisiert werden. Falls das Kautschukpolymerisat fein verteilt vorliegt (z.B. in Form eines Pulvers oder Granulat) kann zur Homogenisierung auch ein Pulvermischer verwendet werden. Durch diese Homogenisierung ist es möglich, unabhängig von der Form und Größe der bestrahlten Gebinde ein durchgehend bezüglich des Gelgehalts einheitliches Produkt zu erhalten.

Selbstverständlich kann der gewünschte mittlere Gelgehalt auch durch Abmischen mit un-, höher- oder niedriger bestrahlten Polymerisaten, d.h. Polymerisaten mit unterschiedlichen Gelgehalten, eingestellt werden.

Als Formkörper können bevorzugt hergestellt werden Profile, Schläuche, O-Ringe, Dichtungen, Platten, Riemen, Gürtel, Gurte und Folien.

Zur Herstellung der Formkörper können die Kautschukpolymerisate mit den üblichen Hilfs- und Verarbeitungsmitteln in den bekannten Mengen abgemischt werden, wie beispielsweise in Encyclopedia of Polymer Science and Engineering, Vol. 4, S. 66ff (Compoundierung) und Vol. 17, S. 666ff (Vulkanisation) beschrieben. Als Hilfs- und Verarbeitungsmittel werden beispielsweise genannt: Ruße, mineralische Füllstoffe, Metalloxide, Öle, Fettsäuren, org. Peroxide oder andere Vernetzer, Weichmacher, Anti-Stick-Mittel, Trennmittel, Antistatika, Flamm- und Alterungsschutzmittel.

Darüber hinaus ist es selbstverständlich möglich, die erfindungsgemäßen Kautschukpolymerisate vor deren Weiterverarbeitung zu Formkörpern mit weiteren Polymeren abzumischen, um ein gewünschtes Eigenschaftsbild für die herzustellenden Formkörper zu erreichen. Als Polymerisate werden beispielsweise genannt: Acrylatkautschuk (ACM), Polybutadien (BR), Polychloropren (CR), chloriertes und chlorsulfoniertes Polyethylen (CM, CSM), Polyvinylchlorid (PVC), Ethylen-Propylen-Kautschuk (EPM), Ethylen-Propylen-Dien-Kautschuk (EPDM), Ethylen-Vinylacetat-Kautschuk (EVM), Polyisopren (IR, NR), Acrylnitril-Butadien-Kautschuk (NBR), hydrierter Acrylnitril-Butadien Kautschuk (HNBR), Styrol-Butadien-Kautschuk (SBR), Ethylen-Methyl(meth)acrylat-Kautschuk, insbesondere Ethylen-Vinylacetat-Kautschuk, Ethylen-Methyl(meth)acrylat-Kautschuk und Acrylatkautschuk. Ethylen-Vinylacetat-Kautschuk ist z.B. unter der Bezeichnung Levapren® der Fa. Bayer AG im Handel, Ethylen-acrylat-Kautschuk als VAMAC® der Fa. DuPont.

Die zuzusetzenden Polymerisate können sowohl einzeln als auch im Gemisch untereinander den erfindungsgemäßen Kautschukpolymerisaten zugemischt werden. Das Mischungsverhältnis von erfindungsgemäßen Kautschukpolymerisaten zu zugemischten Polymerisaten liegt dabei im Bereich von 0,1-99,9:99,9-0,1 %. Die günstigsten Mischungsverhältnisse können leicht durch Vorversuche ermittelt werden und hängen von den jeweiligen Verwendungszwecken der Mischungen ab.

Die Herstellung der Formkörper mit Hilfe der erfindungsgemäßen Kautschukpolymerisate kann unter Verwendung in der Kautschuk-verarbeitenden Industrie üblicher Aggregate, wie insbesondere Extruder, Kalander, Spritzgußapparate, bewerkstelligt werden.

Die erfindungsgemäßen Kautschukpolymerisate weisen neben einer guten Verarbeitbarkeit eine erhöhte Füllbarkeit auf. Außerdem können die Polymerisate mit höheren Mengen an Weichmacher kompoundiert werden, was die Flexibilität in der Kälte erhöht.

Ein zusätzlicher wichtiger Vorteil der erfindungsgemäß hergestellten Kautschukpolymerisate ist die deutliche Verbesserung der Rieselfähigkeit, die für kontinuierliche Fertigungen unabdingbar ist. Insbesondere Levapren® ist unbestrahlt wegen seiner starken Klebrigkeit nur kurze Zeit rieselfähig. Dieser Nachteil wird durch die erfindungsgemäße Bestrahlung ausgeräumt.

Die nachstehend aufgeführten Beispiele dienen zur Verdeutlichung der Erfindung.

## Beispiele

Die Bestrahlung der Proben mit $\gamma$-Strahlen wurde wie folgt durchgeführt: Es wurden aus der laufenden Produktion 25 kg Säcke mit Kartonumverpackung in der 3,5 Mci $^{60}$Co-Gamma-Anlage der Fa. Beta Gamma Service GmbH & Co. KG in Wiehl bestrahlt.

Levapren® ist ein Co-Polymerisat aus Ethylen und Vinylacetat und ein eingetragenes Warenzeichen der Bayer AG.

Vamac® G ist ein Co-Polymerisat aus Ethylen, Methylacrylat und carboxylhaltigem Termonomer und ein eingetragenes Warenzeichen von Dupont.

Levapren® 700 HV hat einen Gehalt von 70 % Vinylacetat.

Vamac® G hat einen Gehalt von 55 % Methylacrylat.

In den Beispielen wurden die Mooney Werte auf einem Monsanto Rheometer MDR 2000E gemessen, die Gelgehalte und die Quellungsindices wurden nach der obigen Methode bestimmt.

## Beispiel 1

Levapren® 700 HV mit einer Mooney-Viskosität (ML 1+4, 100°C) von 27 ME und einem Gelgehalt von unter 1 % wurde mit 82 kGy nach dem zuvor beschriebenen Verfahren mit $\gamma$-Strahlen bestrahlt. Messungen ergaben eine Mooney-Viskosität (ML 1+4, 100°C) von 55 ME, einen Gelgehalt von 47 % und einen Quellindex von 59 nach der Bestrahlung.

## Beispiel 2 (Vergleich)

Levapren® 700 HV mit einer Mooney-Viskosität (ML 1+4, 100°C) von 27 ME und einem Gelgehalt von unter 1 % wurde mit 282 kGy nach dem zuvor beschriebenen Verfahren mit $\gamma$-Strahlen bestrahlt. Messungen ergaben eine Mooney-Viskosität von über 200 ME (Grenze des Meßbereichs), einen Gelgehalt von 93 % und einen Quellindex von 9 nach der Bestrahlung.

## Beispiel 3

Vamac® G mit einer Mooney-Viskosität (ML 1+4, 100°C) von 16 ME und einem Gelgehalt von <0,5% wurde mit 40 kGy nach dem zuvor beschriebenen Verfahren mit $\gamma$-Strahlen bestrahlt. Messungen ergaben eine Mooney-Viskosität (ML 1+4, 100°C) von 78 ME, einen Gelgehalt von 44 % und einen Quellindex von 70 nach der Bestrahlung.

## Mischungsherstellung:

Hierbei wurde eine übliche Mischungsrezeptur eingesetzt. Die Mischungsbestandteile wurden in einem Laborinnenmischer nach den üblichen Methoden gemischt (vgl. z.B. Encylopedia of Polymer Science and Engineering, Vol. 4, S. 66ff.).

Rhenogran®, Rhenovin® und Rhenofit® sind eingetragene Warenzeichen der Rhein Chemie Rheinau GmbH.

Aus dem Produkt gemäß Beispiel 2) konnte keine Mischung hergestellt werden, da es nicht verarbeitbar war.

Tabelle 1

| | unvernetztes Ausgangsmaterial | vernetztes Material aus Beispiel 1 |
|---|---|---|
| Levapren® 700 HV | 100 | - |
| Levapren® 700 HV bestrahlt | - | 100 |
| Rhenogran® P50 (Hydrolyseschutzmittel) | 3 | 3 |
| Ruß N 550 (1) | 60 | 60 |
| Stearinsäure (Anti-Stick) | 1 | 1 |
| Rhenovin® DDA-70 (Alterungsschutzmittel) | 1,5 | 1,5 |
| Rhenofit® TAC/S (Vernetzungsaktivator) | 3,5 | 3,5 |
| Polydispersion T (VC) D-40 P | 4 | 4 |
| Gesamt: | 173 | 173 |

1) erhältlich von der Degussa AG

**Mischungseigenschaften**

| Dichte | (g/cm$^3$) | 1,251 | 1,251 |
|---|---|---|---|
| ML 1+4/100°C | (ME) | 53 | 81 |

**Vulkanisateigenschaften:**

**Vulkanisation in der Presse**

| 20 min/170°C | | | |
|---|---|---|---|
| *F | (MPa) | 19,3 | 20,9 |
| *D | (%) | 150 | 170 |
| *S 50 | (MPa) | 7,3 | 4,6 |
| *S 100 | (MPa) | 15,8 | 13,2 |
| +H 23°C | (Shore A) | 84 | 77 |
| ∆WW-VDE-0472 | (N/mm) | 4,7 | 5,9 |

* bestimmt mittels Zugversuch nach DIN 52 504 mit Normstab 2

+ bestimmt nach DIN 53 505

∆ bestimmt nach VDE 0472

Polydispersion T (VC)D-40P ist ein organisches Peroxid und erhältlich von Chemie Rheinau GmbH.

Tabelle 2

| | unvernetztes Ausgangsmaterial | vernetztes Material aus Beispiel 3 |
|---|---|---|
| Vamac®G | 100 | - |
| Vamac®G | - | 100 |
| Rhenogran® P50 (Hydrolyseschutzmittel) | 3 | 3 |
| Ruß N 550 (1) | 40 | 40 |
| Stearinsäure (Anti-Stick) | 1 | 1 |

1) erhältlich von der Degussa AG

Tabelle 2   (fortgesetzt)

|  | unvernetztes Ausgangsmaterial | vernetztes Material aus Beispiel 3 |
|---|---|---|
| Rhenovin® DDA-70 (Alterungsschutzmittel) | 1,5 | 1,5 |
| Rhenofit® TAC/S (Vernetzungsaktivator) | 3,5 | 3,5 |
| Polydispersion T (VC) D-40 P | 4 | 4 |
| Gesamt: | 153 | 153 |

**Mischungseigenschaften**

| Dichte (Elatest) | $(g/cm^3)$ | 1,186 | 1,186 |
|---|---|---|---|
| ML 1+4/100°C | (ME) | 54,2 | 85,6 |

**Vulkanisateigenschaften:**

**Vulkanisation in der Presse**

| 20 min/170°C |  |  |  |
|---|---|---|---|
| F* | (MPa) | 15,2 | 15,2 |
| D* | (%) | 310 | 280 |
| S 50* | (MPa) | 1,3 | 1,4 |
| S 100* | (MPa) | 3,0 | 3,7 |
| S 200* | (MPa) | 9,7 | 11,0 |
| H+ | (Shore A) | 48 | 50 |
| Weiterreißwiderstand$^\Delta$ | (N/mm) | 10,4 | 8,9 |

\* bestimmt mittels Zugversuch nach DIN 52 504 mit Normstab 2

+ bestimmt nach DIN 53 505

Δ bestimmt nach VDE 0472

Beispiel 1 zeigt die erfindungsgemäße Behandlung eines EVA-Kautschuks; in Beispiel 2 wurde eine zu hohe Strahlendosis gewählt.

Tabelle 1 zeigt vergleichbar gute Eigenschaften der Vulkanisate auf Basis eines Ethylen Vinylacetat Copolymeres. Trotz eines erhöhten Mooney-Wertes (ML 1+4, 100°C) des erfindungsgemäßen Kautschukpolymerisats sind die Vulkanisateigenschaften nahezu unverändert.

Tabelle 2 zeigt vergleichbar gute Eigenschaften der Vulkanisate auf Basis eines Ethylen-Methylacrylat Copolymeren. Trotz eines erhöhten Mooney-Wertes (ML 1+4, 100°C) des erfindungsgemäßen Kautschukpolymerisats sind die Vulkanisateigenschaften nahezu unverändert.

**Patentansprüche**

1.   Kautschukpolymerisate auf Basis von polymerisierbaren Monomeren ausgewählt aus der Gruppe bestehend aus Ethylen, Propylen, 1-Buten, 2-Buten, 1-Penten, Chlorethylen, Styrol, Methylacrylat, Methylmethacrylat, Ethylmethacrylat, Methacrylsäure, Vinylacetat, Maleinsäure-mono- und -diester, Methylvinylether, Ethylvinylether, Cyanacrylat, Butadien, Isopren, Chloropren und Ethylidennorbornen mit einem Gelgehalt im Bereich von 40 bis 80 %, bezogen auf die gesamte Menge an Polymerisat, und einem Quellindex von 30 bis 75, bezogen auf das Gel, wobei man den Gelgehalt und den Quellindex durch Behandlung mit γ-Strahlen einstellt.

2.   Kautschukpolymerisate nach Anspruch 1, **dadurch gekennzeichnet, daß** die Hauptkette besagter Kautschukp-

olymerisate zu $\geq$ 90 % gesättigt ist.

**3.** Kautschukpolymerisate nach Anspruch 1, **dadurch gekennzeichnet, daß** besagtes Kautschukpolymerisat auf Ethylen und Vinylacetat, auf Ethylen und Acrylat oder auf Acrylat basiert.

**4.** Verfahren zur Herstellung von Kautschukpolymerisaten nach Anspruch 1, **dadurch gekennzeichnet, daß** man die Behandlung mit γ-Strahlung mit einer Strahlendosis im Bereich von 20 bis 140 kGy durchführt.

**5.** Verfahren nach Anspruch 4, **dadurch gekennzeichnet, daß** die Kautschukpolymerisate vor der Behandlung mit γ-Strahlung gemäß dem Stand der Technik polymerisiert worden sind.

**6.** Verwendung der Kautschukpolymerisate nach Anspruch 1 zur Herstellung von Formkörpern aller Art.

**Claims**

**1.** Rubber polymers based on polymerisable monomers selected from the group consisting of ethylene, propylene, 1-butene, 2-butene, 1-pentene, chloroethylene, styrene, methyl acrylate, methyl methacrylate, ethyl methacrylate, methacrylic acid, vinyl acetate, maleic acid monoesters and diesters, methyl vinyl ether, ethyl vinyl ether, cyanoacrylate, butadiene, isoprene, chloroprene and ethylidenenorbornene and having a gel content in the range from 40 to 80%, relative to the entire quantity of polymer, and a swelling index of 30 to 75, relative to the gel, wherein the gel content and swelling index are established by treatment with γ radiation.

**2.** Rubber polymers according to claim 1, **characterised in that** the main chain of said rubber polymers is $\geq$90% saturated.

**3.** Rubber polymers according to claim 1, **characterised in that** said rubber polymer is based on ethylene and vinyl acetate, on ethylene and acrylate or on acrylate.

**4.** Process for the production of rubber polymers according to claim 1, **characterised in that** treatment with γ radiation is performed at a radiation dose in the range from 20 to 140 kGy.

**5.** Process according to claim 4, **characterised in that** the rubber polymers have been polymerised according to the prior art before the treatment with γ radiation.

**6.** Use of the rubber polymers according to claim 1 for the production of mouldings of all kinds.

**Revendications**

**1.** Polymères de caoutchoucs à base de monomères polymérisables choisis parmi l'éthylène, le propylène, le 1-butène, le 2-butène, le 1-pentène, le chloroéthylène, le styrène, l'acrylate de méthyle, le méthacrylate de méthyle, le méthacrylate d'éthyle, l'acide méthacrylique, l'acétate de vinyle, les mono- et di-esters d'acide maléique, le méthylvinyléther, l'éthylvinyléther, le cyanoacrylate, le butadiène, l'isoprène, le chloroprène et l'éthylidènenorbornène avec une teneur en gel dans le domaine de 40 à 80 %, rapportés à la quantité totale de polymère, et un indice de gonflement de 30 à 75, rapporté au gel, la teneur en gel et l'indice de gonflement étant ajustés par traitement avec des rayonnements γ.

**2.** Polymères de caoutchoucs selon la revendication 1, **caractérisé en ce que** la chaîne principale desdits polymères de caoutchouc est saturée jusqu'à $\geq$ 90 %.

**3.** Polymères de caoutchoucs selon la revendication 1, **caractérisé en ce que** ledit polymère de caoutchouc est à base d'éthylène et d'acétate de vinyle, d'éthylène et d'acrylate ou d'acrylate.

**4.** Procédé pour la préparation de polymères de caoutchoucs selon la revendication 1, **caractérisé en ce que** l'on réalise le traitement avec un rayonnement γ avec un dose de rayonnement dans le domaine de 20 à 140 kGy.

**5.** Procédé selon la revendication 4, **caractérisé en ce que** les polymères de caoutchoucs ont été polymérisés avant le traitement avec un rayonnement γ selon l'état de la technique.

6. Utilisation des polymères de caoutchoucs selon la revendication 1 pour la préparation de corps moulés de tous types.